# EUROPEAN PATENT APPLICATION

(11) **EP 0 853 236 A1**
(43) Date of publication of application: **15.07.1998**
(21) Application number: 97310409.4
(22) Date of filing: 22.12.1997
(51) Int. Cl.: G01F 23/296

(54) **Fluid detector**

(30) Priority: 14.01.1997 GB 9700585
(71) Applicant: Smiths Industries Public Limited Company, London, NW11 8DS (GB)
(72) Inventor: Campbell-Smith, Iain, Andover, Hampshire SP10 2UD (GB)
(74) Representative: Flint, Jonathan McNeill

(57) **Abstract**

A fluid level detector has a piezoceramic transducer 20 mounted on the front wall inside a sealed plastic cap 21. The cap 21 is secured to a metal body 26 clamped about an opening 31 through the wall 2 of a fluid container 2. The transducer 20 receives short bursts of energy from a generator 4 via a logic unit 5 causing it to resonate, the ringing energy being greater when the transducer is not covered by fluid, because it is less damped. A receiver 10 connected to the transducer 20 via the logic unit 5 provides an output to a comparator 13, which determines whether the signal is above a predetermined level indicating an absence of fluid.

## Description

This invention relates to fluid detectors.

In many applications it is necessary to be able to detect the presence or absence of a fluid, such as to indicate whether fluid is above or below a particular level in a tank. Previous fluid detectors have included optical devices, thermal devices or electrical devices responsive to the change in resistance caused by the presence of the fluid.

It is an object of the present invention to provide an improved fluid detector.

According to one aspect of the present invention there is provided a fluid detector comprising an ultrasonic transducer arranged to be acoustically coupled with the fluid, a generator for energizing the transducer to produce ringing, a circuit responsive to the ringing energy in the transducer, and a comparator for determining whether the ringing energy is above or below a predetermined value and for providing an output accordingly representative of the presence or absence of fluid.

The generator and circuit are preferably connected to the transducer via a logic unit.

According to another aspect of the present invention there is provided a fluid detector comprising an ultrasonic transducer arranged to be acoustically coupled with the fluid, and a circuit for detecting a change in damping of the transducer caused by a change between the transducer being acoustically coupled with fluid or uncoupled from fluid.

The transducer is preferably mounted on one side of a wall, the opposite side of the wall being exposed to contact by the fluid. The wall may be a part of a sealed cap. The cap may be of a plastics material and be attached to a metal body clamped to a wall of a fluid container. The detector is preferably arranged to indicate a fault in the absence of a signal from the transducer. The detector preferably includes a circuit for providing a test signal simulating an output produced by the transducer when the transducer is coupled with fluid. The detector may be a fluid level monitor, the transducer being mounted on a vertical wall of a fluid container.

A fuel level detector system according to the present invention, will now be described, by way of example, with reference to the accompanying drawings, in which:
- Figure 1: shows the system schematically; and
- Figure 2: is a sectional side elevation of the transducer.

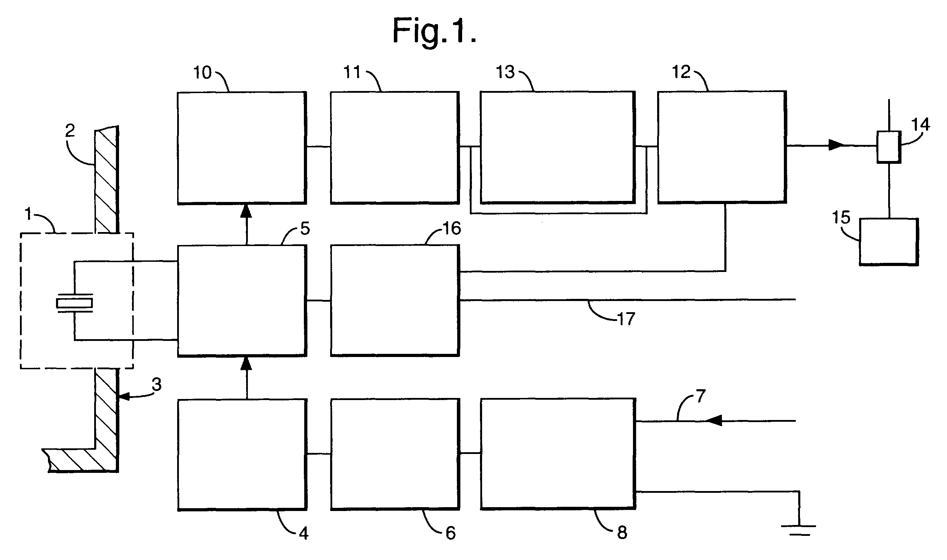

With reference first to Figure 1, the fuel level detector system has an ultrasonic transducer 1 mounted on a vertical wall 2 of a fuel tank 3 at a height at which the level of fuel is to be detected. The transducer 1 is connected to a ping generator 4 via a transmit/receive logic unit 5. The ping generator 4 is operative periodically to supply short bursts of energy to the transducer 1 to drive it at resonance for a few cycles. The generator 4 is controlled by a clock 6, which receives power on line 7 via a power supply conditioning unit 8. A receiver unit 10 is also connected to the transducer 1 via the logic unit 5 and provides an output to a level detector unit 11. The level detector unit 11 has an output connected to an output logic unit 12 and to a window comparator unit 13, which has an output connected to the output logic unit. The output of the output logic unit 12 is connected to utilization means, such as a relay 14 connected to an alarm unit 15.

The detector system also includes built-in test equipment (BITE)16 connected to the logic units 5 and 12. The BITE 16 receives inputs on line 17.

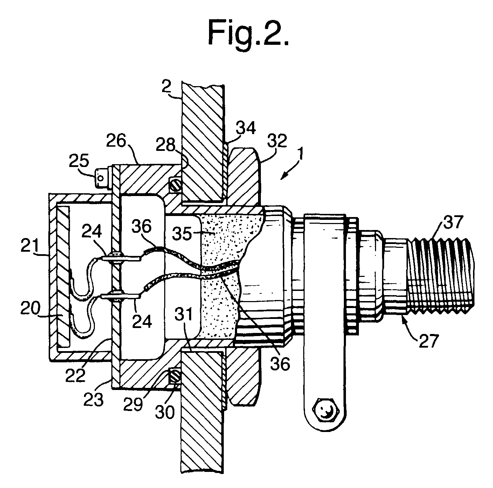

With reference now also to Figure 2, the transducer 1 has a piezoceramic element 20 with its forward face adhered to the inside surface of the front wall of a plastics cap 21, so that the element is acoustically coupled to any liquid on the other side of the cap. The cap 21 is a sealed unit with a base plate 22 projecting radially outwardly as a flange 23. Electrical connector pins 24 connected to the transducer element 20 project through and are sealed with the base plate 22. The rear face of the flange 23 abuts and is secured by bolts 25 to the forward end of a hollow stainless steel body 26 of an hermetic connector 27. A rearwardly-facing shoulder 28 on the body 26 has an annular channel 29 containing an O-ring seal 30. The connector 27 extends through an opening 31 in the wall 2 of the tank 1, with the shoulder 28 and O-ring seal 30 abutting the inside surface of the wall. A retaining nut 32 is threaded on the body 26 and is tightened against the outside surface of the wall 2, sandwiching a washer 34 between the nut 32 and the wall 2. The body 26 of the connector 27 contains an electrically-insulative potting material 35, which forms a seal between the inside of the body and wires 36 connected to the pins 24. The wires 36 extend rearwardly where they are soldered to conventional connector contacts (not shown) within an externally-threaded rear portion 37 of the connector.

In operation, the generator 4 supplies a short burst of energy to the piezoelectric element 20 at its resonant frequency, so that it is energized for several cycles. The transducer 1 is then unenergized so that the element 20 rings, its oscillation dying away with time at a rate dependent on the Q of the transducer. This energization is repeated at a rate that enables the transducer ringing to die away, typically, this may be several times a second. The Q of the transducer 1 will rise, that is, the ringing energy will be larger, when the transducer changes from being covered by fuel to being uncovered, because the element 20 is less damped. During the time that the transducer 1 is not energized, the logic unit 5 connects the transducer to the receiver 10, which provides an output to the level detector 11. The level detector 11 converts the receiver output into a dc voltage representative of the energy level in the transducer 1. When there is a large increase in this energy level, the level detector 11 provides an output directly to the logic unit 12 in order to activate the relay 14 and energize the alarm 15, so as to provide an indication of a low fuel level. The output of the level detector 11 is also supplied to the window comparator 13 where it is compared against reference voltages to determine whether the output is low (indicating the transducer is covered), high (indicating that the transducer is uncovered) or absent (indicating that the transducer has failed). In the latter case, the comparator 13 provides an output to the logic unit 12 to inhibit the output and provide instead a failure indication.

In order to test the system, a signal is supplied on line 17 to the BITE logic unit 16. This causes the transmit/receive logic unit 5 to disconnect the transducer 1, the BITE logic unit 16 instead providing an output to the receiver 10 simulating the output from a covered transducer.

The system provides a reliable indication when fuel level rises above or falls below the level of the transducer 1. It will be appreciated that the system could be used to detect the presence or absence of other fluids and that it need not necessarily be confined to level monitoring. For example, the transducer could be located in a pipeline to detect the presence or absence of liquid in the pipeline. Where the wall of the fluid container is suitable, it is possible for the transducer to be mounted outside the container, with the transducer element being acoustically coupled to the outside of the wall so that, when fluid in the container rises above or falls below the level of transducer element, it produces a change in damping of the element.

## Claims

1. A fluid detector comprising an ultrasonic transducer (1) arranged to be acoustically coupled with the fluid, a generator (4) for energizing the transducer (1) to produce ringing, a circuit (10, 11) responsive to the ringing energy in the transducer (1), and a comparator (13) for determining whether the ringing energy is above or below a predetermined value and for providing an output accordingly representative of the presence or absence of fluid.

2. A fluid detector according to Claim 1, characterised in that the generator (4) and circuit (10, 11) are connected to the transducer (1) via a logic unit (5).

3. A fluid detector comprising an ultrasonic transducer (1) arranged to be acoustically coupled with said fluid, and a circuit (10, 11) for detecting a change in damping of the transducer (1) caused by a change between the transducer being acoustically coupled with the fluid or uncoupled from the fluid.

4. A fluid detector according to any one of the preceding claims, characterised in that the transducer (1) is a mounted on one side of a wall, and that the opposite side of the wall is exposed to contact by the fluid.

5. A fluid detector according to Claim 4, characterised in that the wall is a part of a sealed cap (21).

6. A fluid detector according to Claim 5, characterised in that the cap (21) is of a plastics material, that the cap (21) is attached to a metal body (26), and that the metal body (26) is clamped to a wall (2) of a fluid container.

7. A fluid detector according to any one of the preceding claims, characterised in that the detector is arranged to indicate a fault in the absence of a signal from the transducer.

8. A fluid detector according to any one of the preceding claims, characterised in that the detector includes a circuit (16) for providing a test signal simulating an output produced by the transducer (1) when the transducer is coupled with fluid.

9. A fluid detector according to any one of the preceding claims, characterised in that the detector is a fluid level monitor, and that the transducer (1) is mounted on a vertical wall (2) of a fluid container.
